# EUROPEAN PATENT SPECIFICATION

(11) **EP 0 870 572 B1**
(45) Date of publication and mention of the grant of the patent: **28.08.2002**
(21) Application number: 98200843.5
(22) Date of filing: 17.03.1998
(51) Int. Cl.: B23K 33/00

(54) **Method of cutting the end of a tube and welding this end to a body**
Verfahren zum Schneiden eines Rohrendes und zum Schweissen dieses Rohrendes an einem Werkstück
Procédé de découpage d'une extrémité d'un tube et soudage de cette extrémité sur une pièce

(30) Priority: 25.03.1997 NL 1005616
(43) Date of publication of application: 14.10.1998
(73) Proprietor: Alka Holland Holding B.V., 1775 BA Middenmeer (NL)
(72) Inventor: Glijnis, Pieter Cornelis, 1775 BP Middenmeer (NL)
(74) Representative: Metman, Karel Johannes

(56) References cited:
- GB-A- 772 337
- GB-A- 883 362
- GB-A- 1 548 688
- US-A- 2 091 982

## Description

The present invention relates to a method for cutting the end of a tube along its curve of penetration with the surface of a body which intersects the central axis of the tube at an angle, by means of a cutting apparatus whose cutting element is moved substantially along the curve of penetration of the tube and the body, and a fusion edge is formed, at least in the toe zone of the connection between the tube and the body; and also to a method for welding the end of a tube to the surface of a body (see, for example, GB-A-883 362).

With such a method, which is known from practice and which is used for heavily loaded connections between tubular bodies, the end of the tube is cut according to a superposed sinus shape, which can be described purely mathematically. This latter aspect facilitates the control of the cutting apparatus. When the tube is being welded to the cylindrical body by means of the so-called root fusion technique, separate shims must be provided between the end of the tube and the surface of the body, in order to provide the spacing that is desired with root fusion. Then a bonding block in the shape of a small round rod is welded between the tube and the body in a number of places, in order to fix the tube and the body in position with respect to each other. Subsequently, a first welding layer may be provided, at which moment said blocks are removed again, after which the definitive weld is provided. As will be apparent, this is a laborious and labour-intensive method.

GB-A-883 362 discloses methods of the kind mentioned above. It concerns a process of cutting, fitting and securing the end of a tubular member to the outside wall of a second tubular member to form a connecting angular joint. The end of the member is cut in three planes. The inside edges of the cut surfaces of the first member are held in approximate line engagement with the outside wall surface of the second member, with the cut surfaces forming outwardly opening, generally V-shaped grooves. Because the inside edges are held in approximate line engagement no spacing is left to allow weld material to be deposited on the inner surface of the first tubular member. This means the above-described process using shims is still needed for root fusion.

GB-A-1 548 699 discloses a method of welding or brazing the end of a first circular cross-section metal tube to the side of a second circular cross-section metal tube. In this method, a hollow is formed at the end of the first tube at one side thereof. The thus formed end is cut to form a concave butt end for closely fitting the second metal tube, and weld or braze metal is deposited within the hollow. Because the end which results after forming of the hollow is cut in such a way as to ensure a close fit between the two tubes, weld or braze metal can only be deposited on the outer surface of the first tube. Root fusion is thus not possible without the use of shims to provide spacing.

It is an object of the present invention to improve the method of the kind referred to in the introduction, so that a more efficient and simpler method is obtained.

In order to accomplish that objective the method for cutting the end of a tube is characterized in that the tube is cut along a curve which deviates from the curve of

penetration in the intended heel zone of the connection with the body, in such a manner that the end of the tube will butt against the surface of the body in said heel zone, and that the end of the tube will remain spaced from the surface of the body, at least in the toe zone, leaving clear a spacing.

The welding method according to the invention is characterized in that the tube is positioned against the body surface at the angle of intersection with its heel zone, leaving clear the spacing between the end of the tube, at least the toe zone thereof, and the surface of the body, and that the tube is subsequently welded to the body.

This method is based on the insight that in many cases root fusion is necessary especially in the area outside the heel zone, this in connection with strength requirements, as a result of which no spacing is required in the heel zone, and said heel zone may be used in that case for positioning the tube so that the correct spacing is obtained, without shims being required. This simplifies the welding together of the tube and the body to a significant degree, so that costs can be saved, whilst the quality of the welded connection remains ensured.

Preferably the end of the tube is cut in one operation, as in the first place this leads to a simplification of the method, whilst furthermore the formation of a sharp edge in the heel zone, which may easily be damaged, during the second cutting operation is prevented in this manner.

The invention will be explained in more detail hereafter with reference to the drawings, which show an illustrative embodiment of the invention.

Figure 1 is a side view of a cylindrical body and, in abutting relationship therewith, a tube which has been cut according to the method of the invention, which are to be welded together by using the method according to the invention.

Figures 2 - 5 are larger-scale dihedral sections of the connection between the tube and the cylindrical body at places II - V in Figure 1.

Figure 6 shows an outline of the tube with the cut according to the invention.

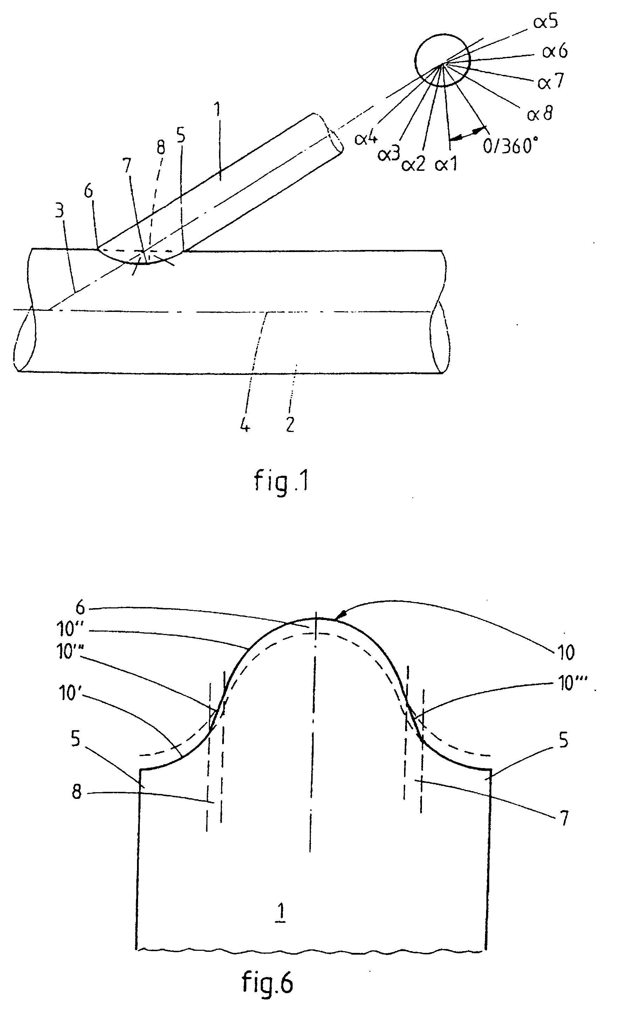

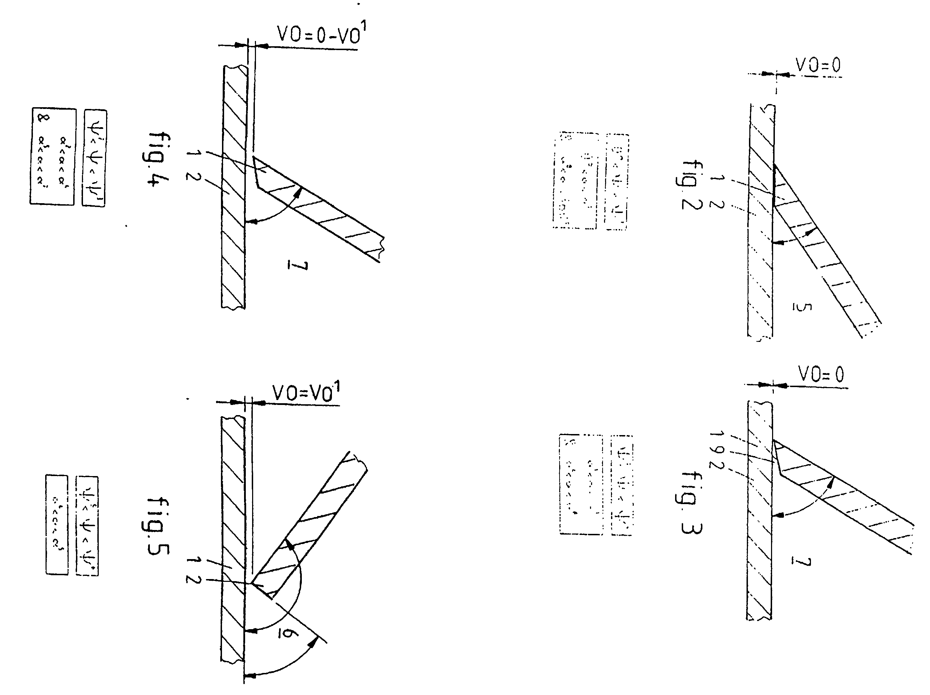

Figure 1 shows a circular cylindrical tube 1 and a cylindrical body 2, which will also be a tube in many cases, but which may also be massive or segmented or be curved in a manner other than cylindrically, or which may even be flat or flattened. Also a conical shape of body 2 would be conceivable. Also the tube may have such deviating shapes. Generally tube 1 and body 2 will form part of a large frame structure for a building or the like, whereby said tubes and/or said bodies jointly form a tubular frame or truss. The tubes and/or the bodies may be made of aluminium, steel, or another kind of weldable structural metal. The cutting of the end of tube 1 may take place by means of a cutting torch, but also by means of a laser beam or a water jet, or by another cutting method. Any suitable welding method may be used for welding the tube to the body, such as electrode welding, MIG welding, TIG welding, and the like.

The end of tube 1 is cut according to a specified shape, and subsequently welded to cylindrical body 2. There are two manners of defining specific locations in the connection between said tube 1 and cylindrical body 2. According to the first manner each place is indicated by means of the angle of rotation along the circumference of tube 1, as is indicated in the right-hand top corner of Figure 1. This angle of rotation starts at O° in the intersection of the plane through the central axis 3 and 4 of tube 1 and cylindrical body 2 respectively and the weld between tube 1 and body 2 at the location of a heel zone 5. Said heel zone 5 is located in the area where the angle between tube 1 and the surface of body 2 is smallest, whilst a toe zone and/or lateral zone 6 (hereinafter called toe zone) is located in the area diametrically opposite thereto, where the angle between the surface of tube 1 and that of body 2 is largest. In a situation where tube 1 extends perpendicularly to body 2, there will be two heel zones 5. The zones on either side of heel zone 5 and toe zone 6 may be indicated as transition zones 7 and 8 respectively.

According to another manner of indicating a location in the connection between tube 1 and cylindrical body 2, use is made of the local dihedral angle, which is defined as the angle, measured in a plane perpendicularly to the welding line, between tangents on the outside surfaces of tube 1 and body 2 at the location of the weld. The external dihedral angle, seen in a local sectional view of the connection, is such that the intersecting planes may be considered to be flat surfaces. This is shown in Figures 2 - 5, of which Figures 3 and 4 should represent the wall of cylindrical body 2 as a curved surface in reality.

Figures 2 - 5 are sectional views of the welded connection to be provided between the end of tube 1 and the surface of body 2, wherein said connection is shown at four different locations on the circumference of tube 1, wherein the section according to Figure 2 is made in the heel zone, the section according to Figure 3 is made in a first portion of transition zone 7, 8, the section according to Figure 4 is made in a second portion of transition zone 7, 8, whilst the section according to Figure 5 is made in toe zone 6. The illustrations under the figures show the areas in dependence on angle of rotation α and dihedral angle ψ at the location of the respective section. A relation between α and ψ is recorded in graphs for circular cylindrical tubes and/or bodies, whereby the relation in the diameters thereof influences the trend of the graph. The boundaries of the heel zone, the toe zone and the transition zones depend on the configuration of the welded connection in question, and they may vary between wide limits.

In Figure 2 the cut end of tube 1 is placed flat against the surface of body 2, in such a manner that spacing VO is zero and that there is no fusion edge or bevel. The weld is provided between the outside surface of tube 1 and the outside surface of body 2 at this location.

Figure 3 shows that a fusion edge 9 is gradually formed in the first portion of transition zone 7 or 8, thus making it possible to provide the weld between the end of tube 1 and the outside surface of body 2. Spacing VO is still zero in this first portion of transition zone 7, 8.

According to Figure 4, spacing VO increases from zero to the eventual spacing VO¹ in the second portion of transition zone 7 or 8. This spacing makes it possible to have the weld continue to the inner side of the wall of tube 1, so that an optimum welding strength is achieved at those locations.

Figure 5 shows the situation in toe zone 6, where both a fusion edge 9 and a spacing VO¹ are shown to be present.

Figure 6 shows an outline of the end of tube 1, which illustrates the shape of cut 10. The figure shows that cut portion 10' at the location of heel zone 5 extends over a superposed sinus shape which is different from that of portion 10'' in toe zone 6. In portions 10''', at the location of transition zones 7 and 8, cut 10 changes over from one superposed sinus shape to another. Said transition cuts can be freely programmed by means of a CNC machine. Also the angle between the central axis of the cutting means or the cutting torch can be varied along the circumference of the tube in dependence on the cut that is desired.

The end of tube 1 is preferably formed in one cutting operation, which is the most efficient method, of course. Nevertheless, the invention also comprises methods wherein the end of the tube is formed in two cutting operations (e.g. according to AWS 1.1-92).

The advantage of the method according to the invention is that no shims or other aids are needed anymore for effecting the spacing VO between the end of tube 1 and the surface of body 2. The correct spacing is automatically provided in that the end of tube 1 abuts against the surface of body 2 in the heel zone, and in that the correct angle is maintained between tube 1 and body 2. The setting of the correct angle between tube 1 and body 2 may take place automatically, in that tube 1 is positioned between two bodies 2, after which the two ends are welded, whilst on the other hand it is also possible to use a positioning element and measuring means for setting and maintaining the correct angle between tube 1 and body 2. In that case no shims will be needed either, thus providing a welded connection which is simple to make.

The invention is not limited to the embodiment described above and illustrated in the drawing, which can be varied in various ways within the scope of the appended claims.

## Claims

1. A method of cutting the end of a tube (1) along its curve of penetration with the surface of a body (2) which intersects the central axis (3) of the tube (1) at an angle, by means of a cutting apparatus whose cutting element is moved substantially along the curve of penetration of the tube (1) and the body (2), in such a manner that the end of the tube (1) will butt against the surface of the body (2) in the intended heel zone (5),and a fusion edge (9) is formed at least in the toe zone (6), **characterized in that** the tube (1) is cut along a curve (10) which deviates from the curve of penetration in the heel zone (5), in such a manner that the end of the tube (1) will remain spaced from the surface of the body (2), at least in the toe zone (6), leaving clear a spacing (VO).

2. A method according to claim 1, wherein the end of the tube (1) is cut in one operation.

3. A method according to claim 2, wherein the end of the tube (1) is cut at such an angle in the heel zone (5), that said end will be positioned flat against the surface of the cylindrical body (2) in said heel zone (5), without a fusion edge being provided.

4. A method according to any one of the preceding claims, wherein the end of the tube (1) gradually changes over from the first curve of penetration in the toe zone (6) to the second curve of penetration in the heel zone (5), which changeover takes place in the transition zones (7, 8) between the heel zone (5) and the toe zone (6).

5. A method according to claims 4 and 5, wherein said transition (7, 8) is made up of a first transition zone portion adjacent to the toe zone, which comprises a fusion edge but which does not comprise a spacing, and a second transition zone portion, which comprises a fusion edge and a spacing.

6. A method according to any one of the preceding claims, wherein the end of the tube (1) is cut substantially radially with respect to the tube (1) in the toe zone (6).

7. A method of welding the end of a tube (1) to the surface of a body (2), **characterized in that** a tube (1), is selected, cutting one end of the tube by a method according to any one of the claims 1-5, positioning the tube (1) at the angle of intersection with its end abutting against the surface of the body (2) in the heel zone (5), leaving clear the spacing between the end of the tube (1), at least the toe zone (6) thereof, and the surface of the body (2), and subsequent welding of the tube (1) to the body (2).

## Patentansprüche

1. Schneidverfahren eines Rohrendes (1) entlang seiner Durchdringungskurve mit der Oberfläche eines Körpers (2), der die Mittelachse (3) des Rohres (1) unter einem Winkel schneidet, mittels einer Schneidvorrichtung, deren Schneidelement im Wesentlichen entlang der Durchdringungskurve des Rohres (1) und des Körpers (2) bewegt wird, derart, dass das Rohrende (1) gegen die Oberfläche des Körpers (2) in der beabsichtigten Fersenzone (5) anstößt, und ein Schmelzrand (9) wenigstens in der Zehenzone (6) ausgebildet wird,
**dadurch gekennzeichnet, dass**
das Rohr (1) entlang einer Kurve (10) geschnitten wird, die von der Durchdringungskurve in der Fersenzone (5) derart abweicht, dass das Rohrende (1) von der Oberfläche des Körpers (2) wenigstens in der Zehenzone (6) beabstandet bleibt, was einen Abstand (VO) freilässt.

2. Verfahren nach Anspruch 1,
wobei das Rohrende (1) in einem Vorgang geschnitten wird.

3. Verfahren nach Anspruch 2,
wobei das Rohrende (1) unter einem derartigen Winkel in der Fersenzone (5) geschnitten wird, dass das Ende flach gegen die Oberfläche des zylindrischen Körpers (2) in der Fersenzone (5) angeordnet sein wird, ohne dass ein Schmelzrand vorgesehen wird.

4. Verfahren nach einem der vorangehenden Ansprüche,
wobei das Rohrende (1) sich allmählich von der ersten Durchdringungskurve in der Zehenzone (6) zu der zweiten Durchdringungskurve in der Fersenzone (5) verändert,
wobei der Wechsel in den Übergangszonen (7, 8) zwischen der Fersenzone (5) und der Zehenzone (6) stattfindet.

5. Verfahren nach Anspruch 4 und 5,
wobei der Übergang (7, 8) durch einen ersten Übergangszonenabschnitt benachbart an die Zehenzone, der einen Schmelzrand, jedoch keinen Abstand aufweist, und einen zweiten Übergangszonenabschnitt gebildet wird, der einen Schmelzrand und einen Abstand aufweist.

6. Verfahren nach einem der vorangehenden Ansprüche,
wobei das Rohrende (1) in der Zehenzone (6) im Wesentlichen radial bezüglich des Rohres (1) geschnitten wird.

7. Schweißverfahren eines Rohrendes (1) an die Oberfläche eines Körpers (2),
**dadurch gekennzeichnet, dass**
ein Rohr (1) ausgewählt wird, wobei ein Ende des Rohres durch ein Verfahren nach einem der Ansprüche 1 bis 5 geschnitten wird, wobei das Rohr (1) unter dem Schnittwinkel mit seinem Ende gegen die Oberfläche des Körpers (2) in der Fersenzone (5) anstoßend angeordnet wird, wobei der Abstand zwischen dem Rohrende (1) wenigstens in der Zehenzone (6) desselben und der Oberfläche des Körpers (2) gelassen wird, und wobei nachfolgend das Rohr (1) an dem Körper (2) geschweißt wird.

## Revendications

1. Procédé de découpage de l'extrémité d'un tube (1) le long de sa courbe de pénétration avec la surface d'un corps (2) qui recoupe l'axe central (3) du tube (1) à un angle, au moyen d'un dispositif de découpage dont l'élément de découpage est déplacé sensiblement le long de la courbe de pénétration du tube (1) et du corps (2), de telle manière que l'extrémité du tube (1) vienne buter contre la surface du corps (2) dans la zone de talon prévue (5) et qu'un bord à souder (9) soit formé au moins dans la zone de pointe (6), **caractérisé en ce que** le tube (1) est découpé le long d'une courbe (10) qui s'écarte de la courbe de pénétration dans la zone de talon (5), de telle manière que l'extrémité du tube (1) reste espacée de la surface du corps (2), au moins dans la zone de pointe (6), en laissant dégagé un espacement (VO).

2. Procédé selon la revendication 1, dans lequel l'extrémité du tube (1) est découpée en une seule opération.

3. Procédé selon la revendication 2, dans lequel l'extrémité du tube (1) est découpée à un angle tel dans la zone de talon (5), que ladite extrémité sera positionnée à plat contre la surface du corps cylindrique (2) dans ladite zone de talon (5), sans qu'un bord à souder soit réalisé.

4. Procédé selon l'une quelconque des revendications précédentes, dans lequel l'extrémité du tube (1) passe progressivement de la première courbe de pénétration dans la zone de pointe (6) à la seconde courbe de pénétration dans la zone de talon (5), lequel passage se produit dans les zones de transition (7, 8) entre la zone de talon (5) et la zone de pointe (6).

5. Procédé selon les revendications 4 et 5, dans lequel ladite transition (7, 8) est constituée d'une première partie de zone de transition adjacente à la zone de pointe, laquelle comprend un bord à souder mais ne comprend pas d'espacement, et une seconde partie de zone de transition, qui comprend un bord à souder et un espacement.

6. Procédé selon l'une quelconque des revendications précédentes, dans lequel l'extrémité du tube (1) est découpée sensiblement radialement par rapport au tube (1) dans la zone de pointe (6).

7. Procédé de soudage de l'extrémité d'un tube (1) sur la surface d'un corps (2), **caractérisé en ce qu**'un tube (1) est sélectionné, de découpe d'une extrémité du tube par un procédé selon l'une quelconque des revendications 1 à 5, de positionnement du tube (1) à l'angle d'intersection, son extrémité butant contre la surface du corps (2) dans la zone de talon (5), en laissant dégagé l'espacement entre l'extrémité du tube (1), au moins la zone de pointe (6) de celui-ci, et la surface du corps (2), et de soudage ensuite du tube (1) sur le corps (2).
